(19) Europäisches Patentamt
European Patent Office
Office européen des brevets

(11) Veröffentlichungsnummer: **0 176 979**
**A2**

(12) # EUROPÄISCHE PATENTANMELDUNG

(21) Anmeldenummer: **85112283.8**

(22) Anmeldetag: **27.09.85**

(51) Int. Cl.[4]: **C 08 G 81/02**

(30) Priorität: **03.10.84 DE 3436176**

(43) Veröffentlichungstag der Anmeldung:
**09.04.86 Patentblatt 86/15**

(84) Benannte Vertragsstaaten:
**AT BE DE FR GB**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**

(72) Erfinder: **Seiler, Erhard, Dr.**
**Erpolzheimer Strasse 1**
**D-6700 Ludwigshafen(DE)**

(72) Erfinder: **Hambrecht, Juergen, Dr.**
**Werderstrasse 30**
**D-6900 Heidelberg(DE)**

(54) **Verfahren zur Herstellung von Propfpolymerisaten auf der Basis von vinylaromatischen Polymeren und anderen Polymeren als Seitenketten.**

(57) Die Erfindung betrifft ein Verfahren zur Herstellung von Pfropfpolymerisaten, die aus Struktureinheiten der allgemeinen Formel (I):

$$-(A)_n-(B)_m-(C)_p- \quad \text{mit } B\text{–O–X–E} \qquad (I)$$

bestehen, worin A = eine einpolymerisierte vinylaromatische Einheit, B = eine Etherseitengruppe tragend einpolymerisierte organische Einheit und C = eine einpolymerisierte Einheit aus einem anderen organischen Monomeren als A und B, n und p = eine ganze Zahl 0, 1, 2 oder 3 oder größer als 3, m = eine ganze Zahl 1, 2, 3 oder größer als 3, X = ein Rest eines mindestens bifunktionellen Kopplungsmittels aus einer organischen oder anorganischen Verbindung und E = ein oder mehrere über ein endständiges Sauerstoffatom gebundene, andere Polymere sind, wobei die Polymere E in einem Lösungsmittel mit einem Siedepunkt von kleiner 300°C mit einem mindestens 1,3fachen Überschuß mit einem mindestens bifunktionellen Kopplungsmittel umsetzt, wobei der Siedepunkt des Kopplungsmittels mindestens 5°C unter dem Siedepunkt des Lösungsmittels liegt und der Überschuß des Kopplungsmittels nach der Umsetzung aus dem Gemisch destillativ entfernt wird in einer Art, daß das Polymere in dem Lösungsmittel gelöst oder suspendiert bleibt.

EP 0 176 979 A2

Verfahren zur Herstellung von Pfropfpolymerisaten auf der Basis von vinylaromatischen Polymeren und anderen Polymeren als Seitenketten

Die Erfindung betrifft ein Verfahren zur Herstellung von Pfropfpolymeren mit Durchschnittsmolekulargewichten (Gewichtsmittel $M_w$) zwischen 5000 und 2 000 000, bevorzugt 20 000 bis 200 000, die aus Strukureinheiten der allgemeinen Formel (I):

```
-(A)n-(B)m-(C)p-
       |
       O               (I)
       |
      X-E
```

bestehen und sich aus den polymeren Einheiten der Hauptkette (II):

```
-(A)n-(B)m-(C)p-
       |
       O               (II)
       |
       H
```

und Einheiten eines gepfropften Polymeren der Seitenkette -X-E ableiten, worin A = eine einpolymerisierte vinylaromatische Einheit, B = eine Etherseitengruppe tragend einpolymerisierte organische Einheit und C = eine einpolymerisierte Einheit aus anderen organischen Monomeren als A und B, wobei die Einheiten A, B und C statistisch, alternierend und/oder blockartig in den polymeren Einheiten der Hauptkette verteilt sind, und wobei n und p = eine ganze Zahl 0, 1, 2 oder 3 oder größer als 3, m = eine ganze Zahl 1, 2, 3 oder größer als 3 und wobei X = der Rest eines mindestens bifunktionellen Kopplungsmittels aus einer organischen oder anorganischen Verbindung und E = ein oder mehrere, über ein endständiges Sauerstoffatom gebundene, andere Polymere sind.

Polymere dieser Art sind mit E = Poly(phenylenether) = (PPE) bekannt und in der älteren deutschen Patentanmeldung P 34 02 791 [EP-A1-.. .. ...] vorgeschlagen. Zur Herstellung der Polymeren wird der Poly(phenylenether) mit einem mindestens bifunktionellen Kopplungsmittel umgesetzt, wobei die terminale Hydroxylgruppe des PPE mit dem Kopplungsmittel reagiert. Die Menge des Kopplungsmittels wird nach der Hydroxylgruppenkonzentration des PPE bemessen. Setzt man zu wenig Kopplungsmittel ein, wird nicht alles PPE umgesetzt. Bei stöchiometrischem Einsatz des bifunktionellen Kopplungsmittels reagiert ein Teil des funktionalisierten PPE in Konkurrenz zum Kopplungsmittel mit noch unreagiertem PPE, so daß man neben dem erwünschten funktionalisierten PPE beträchtliche Mengen an unerwünschtem dimeren PPE und entsprechend übriggebliebenem Kopplungsmittel erhält.

Setzt man mehr als die stöchiometrische Menge Kopplungsmittel ein, stört der Überschuß beim Umsetzen des funktionalisierten PPE mit den polymeren Einheiten der Hauptkette (II). Dadurch wird die Kopplungsausbeute beträchtlich reduziert, man erhält uneinheitliche Produkte.

Der Erfindung lag die Aufgabe zugrunde, ein einfaches Verfahren zur Herstellung von Pfropfpolymerisaten der oben beschriebenen Art aufzufinden, bei dem bei hohen Kopplungsausbeuten und einheitlichen Produkten kein Zwischenprodukt aufgearbeitet werden muß.

Diese Aufgabe wird durch das erfindungsgemäße Verfahren gemäß Patentansprüche 1, 2 und 3 gelöst.

Die in den polymeren Einheiten der Hauptkette (II):

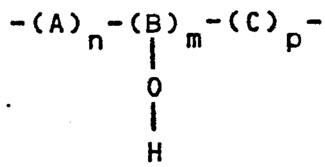

(II)

gegebenenfalls enthaltende Einheit A besteht aus einer einpolymerisierten vinylaromatischen Monomereinheit, insbesondere der allgemeinen Formel

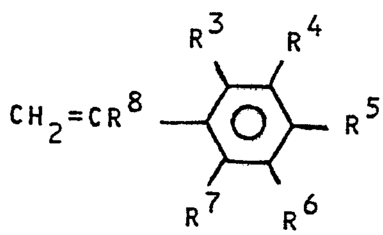

wobei $R^3$ bis $R_7$ = H, $C_1$- bis $C_8$-Alkyl, Halogen, CN, $NO_2$ oder COOH und $R^8$ = H oder $C_1$- bis $C_8$-Alkyl ist. Es sind aber auch andere substituierte vinylaromatische Monomere geeignet. Bevorzugt sind Monomere der obigen Formeln, in denen $R^3$ bis $R^8$ = H oder Methyl, insbesondere H. Die Monomeren der Einheit A enthalten keine Hydroxylgruppen. Der Gehalt an Monomereneinheiten A im Polymeren der Hauptkette ist gegebenenfalls nur dann null, wenn die Einheit B sich von einem Hydroxylgruppen enthaltenden vinylaromatischen Monomer ableitet. Im allgemeinen ist die Zahl n = 1 oder größer als 1.

Im einzelnen sind als Styrolcopolymerisate der Hauptkette besonders solche geeignet, wie sie in der Publikation "Styrene, its Polymers, Copolymers and Derivatives", Book Division Reinhold Publishing Corp., New York, 1952, von R. H. Boundy und in "Partical Polymerization of

Polystyrene", Cahners Book, Boston, 1971, von R. B. Bishop beschrieben sind und der erfindungsgemäßen Zusammensetzung entsprechen.

Außerdem sind die in den US-Patentschriften 3 093 622, 3 069 399, 3 038 890 und 4 360 641 beschriebenen Polymeren aus vinylaromatischen Monomeren geeignet. Vorzugsweise werden als Styrolmonomere A eingesetzt: Styrol, α-Methylstyrol, Vinyltoluol, 2,4-Dimethylstyrol, Fluor-, Dichlor-, Brom-, Dibrom-, p-Phenyl- oder p-Ethylstyrol oder deren Gemische.

Die in den polymeren Einheiten der Hauptkette enthaltene Einheit B besteht aus einer eine Etherseitengruppe tragenden einpolymerisierten organischen Einheit. Diese Einheit leitet sich aus einem einpolymerisierten Hydroxylgruppen enthaltenden Monomer ab, das monoolefinisch ungesättigt ist. Diese Monomereinheit hat bevorzugt die Formel

$$CH_2 = CR^9 - D - (OH)^q,$$

wobei q = eine ganze Zahl größer als Null, $R^9$ = H oder $C_1$- bis $C_8$-Alkyl und D =

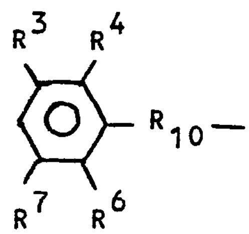

worin $R^3$ bis $R^7$ die bei A angegebene Bedeutung haben und $R_{10}$ = Alkylen, vorzugsweise $C_1$- bis $C_{10}$-Alkylen, oder Cycloalkylen und gegebenenfalls verzweigt, wobei die Hydroxylgruppe(n) entlang der Kette sein können, außerdem kann $R^3$ bis $R^7$ gegebenenfalls gleich $R_{10}$ sein oder $R_{10}$ in ortho oder meta-Position sein oder

D = 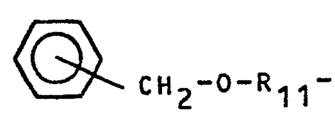

worin $R_{11}$ = Alkylen- oder Cycloalkylen, vorzugsweise $C_2$- bis $C_{10}$-Alkylen, wie es im US-Patent 3 079 369 beschrieben ist. Es kann auch

D = 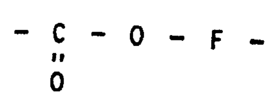

oder

= 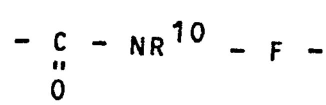

sein, wobei F = ein $C_1$- bis $C_8$-Alkyliden oder Cyclohexyliden und $R^{10}$ = H oder $C_1$- bis $C_8$-Alkyl bedeutet oder

$$F = -CH_2-\underset{OH}{CH}-CH_2-$$

oder $$-CH_2-\underset{Cl}{CH}-CH_2-$$

oder $$F = -CH_2-CH_2-CH_2-CH_2-O-\underset{O}{\overset{}{C}}-(CH_2)_5-$$

oder $$F = -(CH_2-CH_2-O-)_n-CH_2-CH_2-$$

oder $$F = -(CH_2-\underset{CH_3}{CH}-O-)_m-CH_2-\underset{CH_3}{CH}-$$

oder F = Ethylenoxid-Propylenoxidgemisch, wobei n und m = 1,2 oder größer 2 ist oder Gemische der obigen Monomeren.

Als Monomere (B) sind besonders geeignet Hydroxyethyl(meth)acrylat, Hydroxypropyl(meth)acrylat, Hydroxybutyl(meth)acrylat, Hydroxypentyl(meth)acrylat, Hydroxyhexyl(meth)acrylat, Hydroxydecyl(meth)acrylat, Diethylenglykolmono(meth)acrylat, Triethylenglykolmono(meth)acrylat, Tetraethylenglykolmono(meth)acrylat, Dipropylenglykolmono(meth)acrylat, Tripropylenglykolmono(meth)acrylat, Hydroxycyclohexyl(meth)acrylat, Dihydroxypropyl(meth)acrylat oder die entsprechenden Acrylamide, ferner Alkenalkohole, Hydroxystyrol, Dihydroxystyrol, Vinylbenzylalkohol, Vinylbenzolalkohole, wie 1-Vinylbenzoethanol-2, außerdem 2-Hydroxyethyl-m--vinylbenzylether und die in dem US-Patent 3 079 369 namentlich aufgeführten Verbindungen.

Als Einheiten B sind auch solche anzusehen, bei denen die Hydroxylgruppen durch Umsetzung von anderen Monomereinheiten erhalten werden, wie die Hydroxylierung von Butadien und Isopreneinheiten im Sinne einer polymeranalogen Umsetzung. Solche Reaktionen sind im E. Fettes, "Chemical Reaction of Polymers", Inerscience, New York, 1964, besonders S. 152 bis 172, beschrieben.

Als weitere Comonomere (C) werden gegebenenfalls vorzugsweise (Meth)acrylnitril, (Meth)acrylsäureester, (Meth)acrylamide und Diene, wie Butadien und Isopren oder Gemische eingesetzt. Bevorzugt eignen sich Methyl(meth)-acrylat, Ethyl(meth)acrylat, Propyl(meth)acrylate, Butyl(meth)acrylate, Pentyl(meth)acrylat, Hexyl(meth)acrylate, wie n-Hexyl(meth)acrylat und Cyclohexyl(meth)acrylat, Octyl(meth)acrylat, wie 2-Ethylhexyl(meth)-acrylat, Decyl(meth)acrylat, (Poly)-Ethylenglykol- und (Poly)-Propylenglykol(meth)acryate, außerdem die entsprechenden Acrylamide, (Meth)-acrylnitril.

Weitere Comonomere sind in "Styrene, its Polymers, Copolymers and Derivatives", von R. H. Boundy, Publishing Corporation, New York, 1952, aufgezählt.

Die Polymeren der Hauptkette (II) werden in bekannter Weise in Lösung, Suspension, Emulsion oder in Masse hergestellt, wie dies z.B. in "Practical Polymerization of Polystyrene", R. B. Bishop, Calmers Books, Boston, 1971, beschrieben ist, ebenso in den US-Patenten 3 093 622 und 3 079 369 und in WO-A-83/00153.

Die Polymeren der Hauptkette können aber auch aus den entsprechenden polymeren Vorprodukten durch bekannte polymeranaloge Umsetzung erhalten werden, so daß das entstehende Polymere Hydroxylgruppen enthält, z.B. gemäß Houben-Weyl, "Methoden der organischen Chemie", Band 14/2, S. 661 ff oder gemäß E. M. Fettes, "Chemical Reactions of Polymers", Interscience Publishers, New York, 1970.

Die Polymeren Einheiten der Hauptkette (II) bestehen vorzugsweise aus:

0 - 99,9 Gew.-% der monomeren Einheit (A)
0,1 - 100 Gew.-% der monomeren Einheit (B) und
0 - 70 Gew.-% der monomeren Einheit (C),

wobei bei 0 Gew.-% der monomeren Einheit (A) sich zumindest ein Teil der monomeren Einheit B von Hydroxylgruppen enthaltenden vinylaromatischen Monomeren ableitet.

Besonders bevorzugt bestehen die Einheiten der Hauptkette aus:

50 - 99,9 Gew.-% der polymeren Einheit (A)
0,1 - 10 Gew.-% der polymeren Einheit (B) und
0 - 45 Gew.-% der polymeren Einheit (C).

Die polymeren Einheiten der Hauptkette (II) werden in bekannter Weise in Lösung, Suspension, Emulsion oder Masse hergestellt. Sie können aber auch durch bekannte polymeranaloge Umsetzung aus einem Vorpolymerisat erhalten

werden, so daß das Reaktionsprodukt der erfindungsgemäßen Zusammensetzung entspricht.

Die Durchschnittsmolekulargewichte (Gewichtsmittel $M_w$) der polymeren Hauptkette, bestimmt durch Gelpermeations-Chromatographie in 0,25 Gew.-%iger Tetrahydrofuranlösung bei 23°C und einer Durchflußgeschwindigkeit von 1,2 ml/min (vgl. G. Glöckner, "Polymercharakterisierung durch Flüssig-Chromatochraphie", Verlag A. Hüttig, Heidelberg, 1982), liegen zwischen 5 000 und 2 Millionen, vorzugsweise zwischen 20 000 und 200 000.

Neben der Hauptkette (II) enthalten die erfindungsgemäßen Propfpolymeren eine Seitenkette E. Die Seitenkette E besteht aus Polymeren, die mindestens eine funktionelle Hydroxylgruppe tragen. Bevorzugt sind Polymere mit einer Hydroxylgruppe, wenn nicht vernetzte Pfropfpolymere erhalten werden sollen. Bevorzugte Polymere mit einer funktionellen, vorzugsweise endständigen Hydroxygruppe sind Polycarbonat, Polyphenylenether, Polyester, Polyethylenglykolmonoether, Polyethylenglykolmonoester, Polypropylenglykolmonoether, Polypropylenglykolmonoester, Polybutadiene, Polyisoprene, Polystyrole, Copolymerisate aus Dienen mit vinylaromatischen Monomeren sowohl mit statistischem als auch blockartigem Aufbau, Polyisobutylen, Polysulfon, Polyethersulfon, Polyether, Polyoxymethylene, Polyamide, Polyesteramide oder Gemische. Besonders bevorzugt sind Polyphenylenether, im besonderen Poly(2,6-dimethylphenylenether). Das Polymere der Seitenkette E hat ein Molekulargewicht (Gewichtsmittel) von 500 bis 300 000, bevorzugt 3000 bis 100 000 und ist in Pfropfpolymeren (I) in Mengen von 5 bis 95, bevorzugt 20 bis 80 Gew.-%, bezogen auf (I), enthalten.

Derartige Polymere sind beispielsweise beschrieben in dem Handbuch "Ullmans Encyclopädie der technischen Chemie", Band 19 (1980), Seiten 31 bis 38, 227 bis 264 und 297 bis 342 oder in "Journal Polymer Science" 40 (1959), Seite 399, in "Industrial Engineering Chemistry" 51 (1959), Seite 147, in den US-Patenten 3 306 879, 3 914 266, 3 946 091, 4 028 341, 3 956 442 und 3 965 069; in den Deutschen Offenlegungsschriften 29 40 190, 29 36 977 und 30 16 386; in "Polymer Bulletin" 4 (1981), Seiten 343 bis 350, in der Broschüre "Neue polymere Wirkstoffe", von H. G. Elias, Carl Hanser Verlag, Münschen-Wien, (1975), Seiten 1969 bis 1974; im Lehrbuch "Polymer Chemistry" von B. Vollmert, Springer Verlag, Berlin-Heidelberg-New York (1973); im "Polymer Handbook", von I. Brandrup und E. H. Immergut (1975), Verlag John Wiley a. Sons, New York; und in Houben-Weyl, "Methoden der organischen Chemie", Band 14/2 (1963), Seiten 1 bis 636, Verlag Georg Thieme, Stuttgart.

Nach dem erfindungsgemäßen Verfahren werden die Polymeren der Seitenketten E in Lösungsmittel mit einem Siedepunkt kleiner 300°C, vorzugsweise kleiner 200°C eingebracht. Die Lösungsmittel werden nach der Art der Polymeren gewählt und sind wenig reaktiv, vorzugsweise nicht reaktiv mit dem Kopplungsmittel.

Die Polymeren werden in einer Menge eingebracht, daß die entstehende Mischung rührfähig ist. Dabei ist es nicht notwendig, daß alles Polymere gelöst ist. Als Lösungsmittel eignen sich vorzugsweise Kohlenwasserstoff, wie Alkane, Arylalkane und Benzol, Chlorkohlenwasserstoffe, Ether, Ketone, Amide, Nitroverbindungen, Sulfone und Lactame. Bevorzugt eignen sich Benzol, Toluol, o-Xylol, m-Xylol, p-Xylol, Ethylbenzol, Trimethylbenzole, Chlorbenzol, Dichlorbenzol, Dimethylether, Methylethylether, Diethylether, Tetrahydrofuran, Dioxan, Tetrachlorethylen, Tetrachlorkohlenstoff, Chloroform, Methylenchlorid, Aceton Methylethylketon, Cyclohexanon, Dimethkylformamid, Nitrobenzol, Sulfolan, N-Methylpyrrolidon und Heterocyclen, wie Pyridin, außerdem Amine, wie Tributylamin und Dimethylanilin. Das Lösungsmittel wird vorzugsweise nach der Löslichkeit der Polymeren und möglichst geringen Reaktivität mit dem Kopplungsmittel ausgewählt. Bevorzugt sind jedoch Lösungsmittel mit einem Siedepunkt unter 200°C. Es können auch Gemische von Lösungsmitteln eingesetzt werden.

Die Polymeren der Seitenketten E werden mit einem Kopplungsmittel umgesetzt, wobei der Siedepunkt des Kopplungsmittels mindestens 5°C, vorzugsweise mindestens 25°C unter dem des Lösungsmittels liegt.

Als Kopplungsmittel eignen sich solche, die sich mit Hydroxylgruppen umsetzen, vorzugsweise Säurechloride. Die Kopplungsmittel haben erfindungsgemäß einen Siedepunkt unter 295°C, bevorzugt unter 195°C. Besonders geeignet sind Dimethyldichlorsilan, Phosgen und Oxalylchlorid.

Von dem Kopplungsmittel werden mindestens 1,3 Mol, bezogen auf 1 Mol Hydroxylgruppen im Polymeren E eingesetzt. Bevorzugt setzt man 2 Mol, im besonderen mehr als 5 Mol Kopplungsmittel pro Mol Hydroxylgruppen im Polymeren E ein.

Das Kopplungsmittel kann in Substanz oder in Lösung eingesetzt werden. Es wird der Lösung des Polymeren zugesetzt. Vorzugsweise wird jedoch das Kopplungsmittel vorgelegt und die Lösung mit dem Polymeren E zugegeben. Bei dieser bevorzugten Verfahrensweise bleibt das Kopplungsmittel auch beim Abmischen mit den Polymeren E immer im Überschuß. Die entstehende Halogenwasserstoffsäure wird entfernt, entweder durch Austreiben oder

vorzugsweise durch Zusatz eines basischen Materials, vorzugsweise eines tertiären Amins, wie Tributylamin oder Dimethylanilin. Die Reaktionstemperatur wird nach Basenstärke und Siedepunkt des Lösungsmittels eingestellt.

Nach dem erfindungsgemäßen Verfahren wird nach der Umsetzung des Kopplungsmittels mit dem Polymeren E der Überschuß des Kopplungsmittels destillativ abgetrennt. Zum Auftrennen von Kopplungsmittel und Lösungsmittel benutzt man vorzugsweise eine Kolonne mit Dephlegmator.

Besonders vorteilhaft bei dem erfindungsgemäßen Verfahren ist, daß es durch den Überschuß an Kopplungsmittel keine Dimensierung des Polymeren E gibt. Durch den niedrigeren Siedepunkt des Kopplungsmittels gegenüber dem Lösungsmittel kann der Überschuß an Kopplungsmittel entfernt werden, ohne daß aufgearbeitet werden muß oder man im Kolben Absetzungen durch zurückgebliebenes Polymeres erhält. Dies ist für eine technische Ausführung einer Reaktion besonders vorteilhaft.

Die vom Überschuß an Kopplungsmittel befreite Lösung des Polymeren E kann direkt mit dem Polymeren der Hauptkette umgesetzt werden. Es ist nicht notwendig, daß bei der Reaktion anfallende Hydrochlorid des tertiären Amins abzutrennen.

Das Polymere E wird mit dem Polymeren der Hauptkette (II) umgesetzt, wobei das Polymere der Hauptkette (II) gelöst vorgelegt wird und das Polymere E der Seitenketten zugesetzt wird. Vorteilhaft ist die Anwesenheit eines Säurefängers. Die Zugabe des Polymeren E wird vorzugsweise bei erhöhter Temperatur, im besonderen kurz unter dem Siedepunkt der Lösungsmittel durchgeführt.

Das entstehende Pfropfpolymere wird wie üblich aufgearbeitet. Dazu kann das Polymere durch Fällen oder Aufkonzentrieren gewonnen werden. Vor dem Aufarbeiten kann das angefallene Hydrochlorid durch Filtration abgetrennt werden.

Durch das erfindungsgemäße Verfahren erhält man sehr gute Kopplungsausbeuten. Durch Verwendung des Überschusses an Kopplungsmittel erhält man keine Dimeren des Polymeren E. Durch den niedrigen Siedepunkt des Kopplungsmittels kann dieses entfernt werden, ohne das Polymere E aufarbeiten zu müssen. Durch Zulauf des Polymeren E der Seitenketten zum Polymeren (II) der Hauptkette erhält man außerordentlich einheitliche Produkte bei sehr guter Kopplungsausbeute.

Die erzielten Vorteile sind auch insbesondre darin zu sehen, daß man die Hydroxylgruppenkonzentration des Polymeren E nicht genau kennen muß, da nach dem erfindungsgemäßen Verfahren mit höherem Überschuß an Kopplungsmittel gearbeitet werden muß. Dadurch werden Unsicherheiten bei der Analyse der Hydroxylgruppenkonzentration vermieden, die sich vor allem wegen der geringen Endgruppenkonzentration im Polymeren E ergeben. Vorteilhaft ist auch, daß bei ausreichender Zahl an Hydroxylgruppen in der Hauptkette es nach dem erfindungsgemäßen Verfahren nicht notwendig ist, das funktionalisierte Polymere E stöchiometrisch an das Polymere (II) anzupassen, da im Polymeren II nicht alle Hydroxylgruppen wegreagieren müssen.

Beispiel 1

300 g Poly(2,6-dimethylphenylenether), hergestellt gemäß US-Patent 3 914 266, mit einem Molekulargewicht $M_w$ = 53 000 und einer Hydroxylgruppenkonzentration von $4,84.10^{-3}$ Mol/100 g werden in 3 Liter Toluol gelöst. Zum Trocknen des PPE destilliert man zweimal 500 ml Toluol ab und fügt jeweils wieder 500 ml Toluol zu. Die Lösung wird auf 60°C gekühlt und mit 20,1 g Triethylamin versetzt. Die Lösung wird bei 60°C in 30 Minuten zu einer Lösung von 25,3 ($1,94.10^{-1}$ Mol) Dimethyldichlorsilan in 500 ml trockenem Toluol zulaufen. Man rührt 1 h bei 70°C nach. Der Überschuß an Dimethyldichlorsilan wird anschließend über eine Kolonne abdestilliert, der Toluol-Verlust wird durch entsprechenden Zusatz ausgeglichen. Die verbleibende Lösung gibt man bei 70°C in 20 Min. zu einer Lösung von 300 g eines Styrolpolymerisats (bestehend aus 70 Gew.-% Styrol, 25 Gew.-% Acrylnitril und 5 Gew.-% Hydroxybutylacrylat, hergestellt durch kontinuierliche radikalische Polymerisation mit einem $M_w$ von 51 000) und 20 g Tributylamin in 4 Liter Toluol und 400 ml Dimethylformamid. Man läßt 2 h bei Rückfluß nachreagieren, filtriert und dampft das Lösungsmittel ab. Das Polymere hat ein Molekulargewicht $M_w$ von 205 000.

Beispiel 2

215,2 g Lithene HFN 4-5000 (Fa. Metallgesellschaft, Polybutadien-Polymer mit einer endständigen sekundären Hydroxylgruppe, mit einem $M_w$ = 5 000, Hydroxylgruppenkonzentration von $2,04.10^{-2}$ Mol/100 g werden in 3 Liter Toluol gelöst. Man destilliert zum Entwässern 1 Liter Toluol über eine Kolonne ab und versetzt bei 60°C mit 54 g Triethylamin. Die Lösung wird bei 60°C in 30 Minuten zu einer Lösung von 56 g ($4,4.10^{-1}$ Mol) Dimethyldichlorsilan in 1 Liter Toluol zulaufen lassen.

Man rührt 1 h bei 60°C nach. Der Überschuß an Dimethyldichlorislan wird anschließend über eine Kolonne abdestilliert, der Toluolverlust wird durch entsprechenden Zusatz ausgeglichen. Die verbleibende Lösung gibt man bei 70°C in 15 Min. zu einer Lösung von 200 g eines Styrolpolymerisates (bestehend aus 70 Gew.-% p-Methylstyrol (Fa. Mobil, PMS Monomer), 25 Gew.-% Acrylnitril und 5 Gew.-% Hydroxyethylacrylat, hergestellt durch kontinuierliche radikalische Polymerisation, mit einem $M_w$ von 58 000) und 20 g Tributylamin in 4 Liter Toluol und 400 ml Dimethylformamid. Man läßt 2 h unter Rückfluß nachreagieren und fällt in Methanol. Das Polymere hat ein Molekulargewicht $M_w$ von 91 000.

Beispiel 3

50 g Poly(2,6-dimethylphenylenether), hergestellt gemäß US-Patent 3 914 266, mit einem Molekulargewicht $M_w$ von 16 500 und einer Hydroxylgruppenkonzentration von $1{,}15.10^{-2}$ Mol/100 g werden in 600 ml Toluol gelöst. Nach Abdestillieren von 100 ml Toluol setzt man 1,4 g Dithylanilin zu. Man kühlt auf 50°C und läßt die Lösung zu einer auf 0°C abgekühlten Lösung aus 120 ml Toluol und 9,04 g ($9{,}1.10^{-2}$ Mol) Phosgen in 10 Min. zulaufen. Man rührt 1 h nach und erwärmt in 30 Min. auf 110°C. Anschließend destilliert man das überschüssige Phosgen ab, der Toluolverlust wurde durch entsprechenden Zusatz ausgeglichen. Die verbleibende Lösung gibt man bei 60°C in 20 Min. zu einer Lösung von 200 g eines Styrolpolymerisates (bestehend aus 65 Gew.-% p-Methylstyrol, 30 Gew.-% Acrylnitril und 5 Gew.-% Hydroxyethylacrylat, hergestellt durch kontinuierliche Polymerisation, mit einem $M_w$ von 42 000) und 1,4 g Dimethylanilin in 3 Liter Toluol und 300 ml Dimethylformamid. Man rührt 8 h bei 110°C, filtriert und dampft das Lösungsmittel ab. Das Polymere hat ein Molekulargewicht $M_w$ von 90 000.

Patentansprüche

1. Verfahren zur Herstellung von Pfropfpolymeren mit Durchschnittsmolekulargewichten (Gewichtsmittel) zwischen 5 000 und 2 000 000, die aus Struktureinheiten der allgemeinen Formel (I):

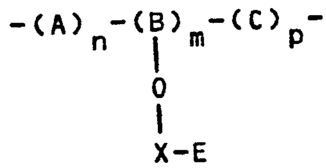

(I)

bestehen und sich aus den polymeren Einheiten der Hauptkette (II):

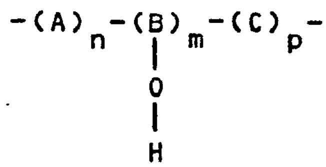

(II)

und Einheiten eines gepfropften Polymeren der Seitenkette -X-E ableiten, worin A = eine einpolymerisierte vinylaromatische Einheit, B = eine Etherseitengruppe tragend einpolymerisierte organische Einheit und C = eine einpolymerisierte Einheit aus anderen organischen Monomeren als A und B, wobei die Einheiten A, B und C statistisch, alternierend und/oder blockartig in den polymeren Einheiten der Hauptkette verteilt sind, und wobei n und p = eine ganze Zahl 0, 1, 2 oder 3 oder größer als 3, m = eine ganze Zahl 1, 2, 3 oder größer als 3 und wobei X = der Rest eines mindestens bifunktionellen Kopplungsmittels aus einer organischen oder anorganischen Verbindung und E = ein oder mehrere über ein endständiges Sauerstoffatom gebundene, andere Polymere sind, dadurch gekennzeichnet, daß man die Polymere E in einem Lösungsmittel mit einem Siedepunkt von kleiner 300°C mit einem mindestens 1,3fachen Überschuß mit einem mindestens bifunktionellen Kopplungsmittel umsetzt, wobei der Siedepunkt des Kopplungsmittels mindestens 5°C unter dem Siedepunkt des Lösungsmittels liegt und der Überschuß des Kopplungsmittels nach der Umsetzung aus dem Gemisch destillativ entfernt wird in einer Art, daß das Polymere in dem Lösungsmittel gelöst oder suspendiert bleibt, und daß man anschließend in Lösung das funktionalisierte Polymere E mit dem Stammpolymeren (II) zu dem Pfropfpolymer (I) umsetzt.

2. Verfahren nach Anspruch 1, dadurch gekennzeichnet, daß man das Polymere E in einem Lösungsmittel mit einem Siedepunkt von kleiner 200°C mit einem mindestens 2fachen Überschuß mit einem bifunktionellen Kopplungsmittel umsetzt, wobei der Siedepunkt des Kopplungsmittels mindestens 25°C unter dem Siedepunkt des Lösungsmittels liegt.

3. Verfahren nach Anspruch 2, dadurch gekennzeichnet, daß man mit einem mindestens 5fachen Überschuß mit einem bifunktionellen Kopplungsmittel umsetzt.